# EUROPEAN PATENT SPECIFICATION

(11) **EP 0 902 519 B1**
(45) Date of publication and mention of the grant of the patent: **14.10.2009**
(21) Application number: 98114654.1
(22) Date of filing: 04.08.1998
(51) Int. Cl.: H02J 7/00

(54) **Battery charging apparatus**
Batterieladevorrichtung
Dispositif de charge de batteries

(30) Priority: 15.09.1997 JP 26938097
(43) Date of publication of application: 17.03.1999
(73) Proprietor: HONDA GIKEN KOGYO KABUSHIKI KAISHA, Minato-ku, Tokyo (JP)
(72) Inventor: Hatanaka, Kaoru, Wako-shi Saitama (JP)
(74) Representative: Liska, Horst

(56) References cited:
- EP-A2- 0 660 489
- FR-A- 2 706 375
- US-A- 5 498 951
- US-A- 5 650 710

## Description

This invention relates to a battery charging apparatus for charging a battery for an electrically-operated vehicle such as an electric automobile and a motor-assist bicycle.

A battery charging apparatus for an electric automobile is disclosed in JP 05-227669 A.
Here, when a charge is imposed for the used amount of a battery, a power rate corresponding to the used amount is imposed.

EP-A2-0 660 489 discloses a battery charging apparatus for charging a battery which comprises accumulation means for accumulating night power and for charging a battery with the night power accumulated in said accumulation means.

US-A-5 498 951 discloses to charge batteries either by midnight power or by ordinary electric power both supplied from commercial power supply.

In a construction wherein a battery is charged using accumulation means which accumulates power in the daytime, as the demand for power consumption in the daytime is high, also the rate is high, and consequently, also the charge for charging of a battery becomes expensive and besides this is not preferable from the point of view of power supply from a power station.

The invention is defined by a battery charging apparatus for charging a battery in accordance with claims 1 and 2, which overcome these problems

Since the battery charging apparatus according to the invention accumulates power into the accumulation means using night power and charges a battery using the accumulated power, the night power can be utilized in the daytime, and besides the power consumption in the daytime can be suppressed and leveling of the power consumption can be achieved.

Further, since the night power rate is less expensive than that in the daytime, also the charge on a user or a rental person of a battery rental system can be reduced. While night power is accumulated, also a battery returned may be charged at night. It is to be noted that, in the daytime, only when the number of batteries for rental is smaller than a predetermined number, they may be charged.

When power higher than the night power accumulated in the accumulation means is required to charge a battery, the battery charging apparatus according to the invention changes the battery using the accumulation means and commercial power supply.

Also where the finite night power accumulated in the accumulation means is insufficient to charge a battery, the battery can be charged sufficiently by the accumulation means and the commercial power supply.
Accordingly, if it becomes necessary to charge a large number of batteries, the large number of batteries can be charged fully.

When the accumulation means accumulates midnight power, the battery charging apparatus charges a battery using commercial power supply from the midnight to the daytime.

The midnight power accumulated in the accumulation means can be prevented from being used to charge a battery and consumed at night before the daytime comes.

In the following, embodiments of the present invention are described with reference to the accompanying drawings.
FIG. 1 is a simple schematic view of an entire battery rental system.
FIG. 2 is a simple schematic view of an unmanned automatic battery rental apparatus (battery exchanging apparatus).
FIG. 3 is a schematic block diagram of essential part of the unmanned automatic battery rental apparatus (battery exchanging apparatus).
FIG. 4 is a block schematic view explaining a condition wherein a battery is accommodated into an accommodation section of the unmanned automatic battery rental apparatus (battery exchanging apparatus).
FIG. 5 is a simple operation flow diagram of the unmanned automatic battery rental apparatus (battery exchanging apparatus).
FIG. 6 is a simple operation flow diagram of the unmanned automatic battery rental apparatus (battery exchanging apparatus).
FIG. 7 is a simple operation flow diagram of the unmanned automatic battery rental apparatus (battery exchanging apparatus).
FIG. 8 is a simple schematic view of a battery for an electrically-operated vehicle.
FIG. 9 is a simple schematic view of a transmission-reception section of the battery of FIG. 8.
FIG. 10 is a simple schematic view of a battery for an electrically-operated vehicle.
FIG. 11 is a simple schematic view of a battery charging apparatus according to the present invention.
FIG. 12 is a simple schematic view of a battery charging apparatus according to the present invention.

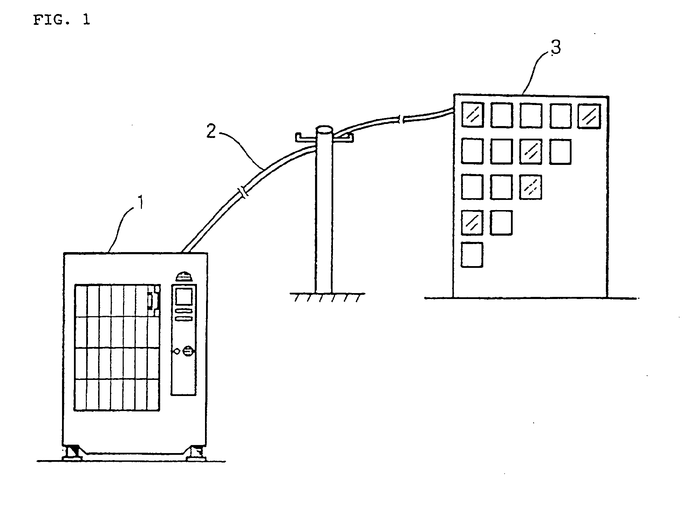

The battery rental system in Fig. 1 is composed of an unmanned automatic battery rental apparatus (battery exchanging apparatus) 1 and a central control apparatus 3 which effects centralized control of the unmanned automatic battery rental apparatus 1 over a communication line 2 using a network.

The battery rental system includes a plurality of unmanned automatic battery rental apparatus 1 arranged in many districts based on the possessed number of electrically operated vehicles such as motor-assist bicycles, the situations of the districts, the travelling distances of electrically-operated vehicles and so forth so as to provide a user (rental person) with facilities, and makes a contract, when a user makes use of the present system, for example, with a company of the battery rental system regarding utilization of the battery rental system directly or through an agent or the like.

The system may be such that a contract of rental or lease of an electrically-operated vehicle may be made with the company of the battery rental system.

A user receives setting of a single user registration number (rental ID) personally for the user or for a family, a company or the like from the company of the battery rental system, stores a battery identification number into the central control apparatus in a corresponding relationship to the rental ID and can enjoy, after the battery is lent, a rental service of a battery making use of the unmanned automatic battery rental apparatus 1.

When the user makes use of the unmanned automatic battery rental apparatus 1, a battery 7 is inserted into a battery returning accommodation section 15 of the unmanned automatic battery rental apparatus 1 so that an identification number of the battery may be recognized by the unmanned automatic battery rental apparatus 1.

The unmanned automatic battery rental apparatus 1 recognizes a battery which has an identification number as a battery for rental and informs the user of a procedure of utilization.

Then, the unmanned automatic battery rental apparatus 1 informs, when returning of the battery used is confirmed, the user of an accommodated position of a battery charged up fully or having an available capacity.

Thereafter, the unmanned automatic battery rental apparatus 1 reads the identification number and the remaining amount of the battery to be serviced for rental as well as the identification number and unique information (remaining amount, (remaining amount when lent, remaining amount at present), the number of times of charging/discharging operations, the number of times of use and so forth) of the used battery returned, calculates a toll subtracting the remaining amount at present from the remaining amount when lent, writes the battery remaining amount when lent into the battery to be lent then so as to be stored and reports the battery remaining amount to the user, and then lends the battery to the user.

Further, the unmanned automatic battery rental apparatus 1 bidirectionally transmits data of a history of the returned battery such as the return date and hour, the toll, the number of times of charging/discharging operations, the number of times of use and so forth, the battery identification number, the rental date and hour, the identification number, the remaining amount when lent and so forth of the lent battery to the central control apparatus 3 over the communication line 2 such as a telephone line or a private line by transmission means such as a modem, or communication means 7T provided in the battery is rendered operative to transmit such data to the central control apparatus 3 over the communication line 2 through the unmanned automatic battery rental apparatus 1.

The central control apparatus 3 connects with the plurality of unmanned automatic battery rental apparatus 1 in the various districts over the communication line 2 and effects centralized control by means of a computer so that rental information of users and unique information of batteries is controlled from the unmanned automatic battery rental apparatus 1.

Particularly, as rental person data, the identification number of the battery lent at present is stored, and if the battery of the identification number is returned to an unmanned automatic battery rental apparatus 1, then the used amount is stored, and the identification number of the battery lent newly and the battery remaining amount then are stored. As the unique information of the battery, the number of times of charging and discharging operations, the number of times of use and so forth are stored.

The central control apparatus 3 informs a battery maintenance section of the company of the battery rental system of the data of the battery, informs a user of a toll after each fixed interval of time and effects collection of the toll through a bank or the like.

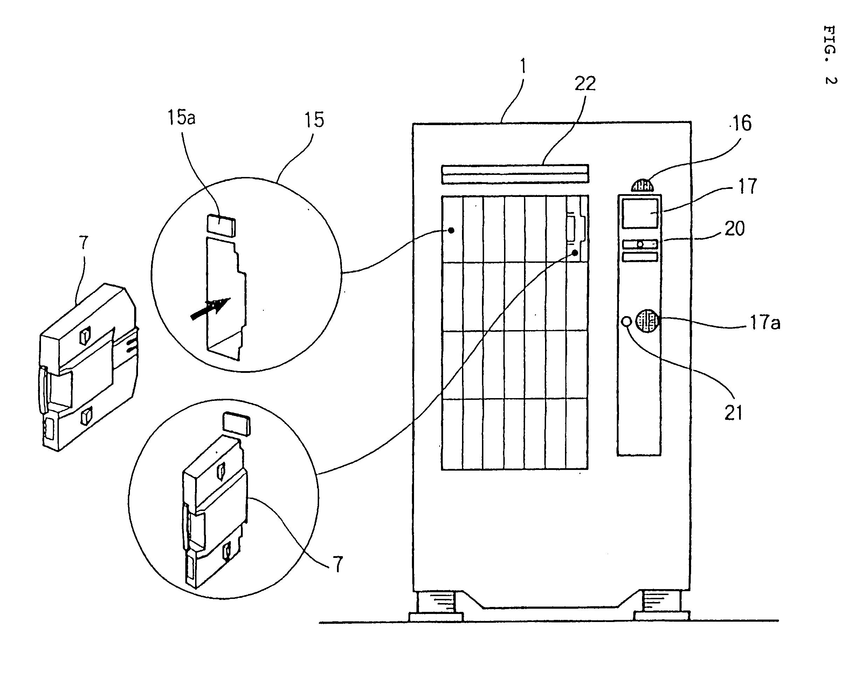

The unmanned automatic battery rental apparatus 1 in Fig. 2 includes batteries 7 for rental, accommodation sections 15, accommodation section indication lamps 15a, an alarming apparatus 16, a display unit 17, an audible indicator 17a, such as a speaker, an interphone call switch 21 and an illumination apparatus 22.

The unmanned automatic battery rental apparatus 1 includes a person detection sensor 20 which operates when a person comes and gives a greeting or the like.

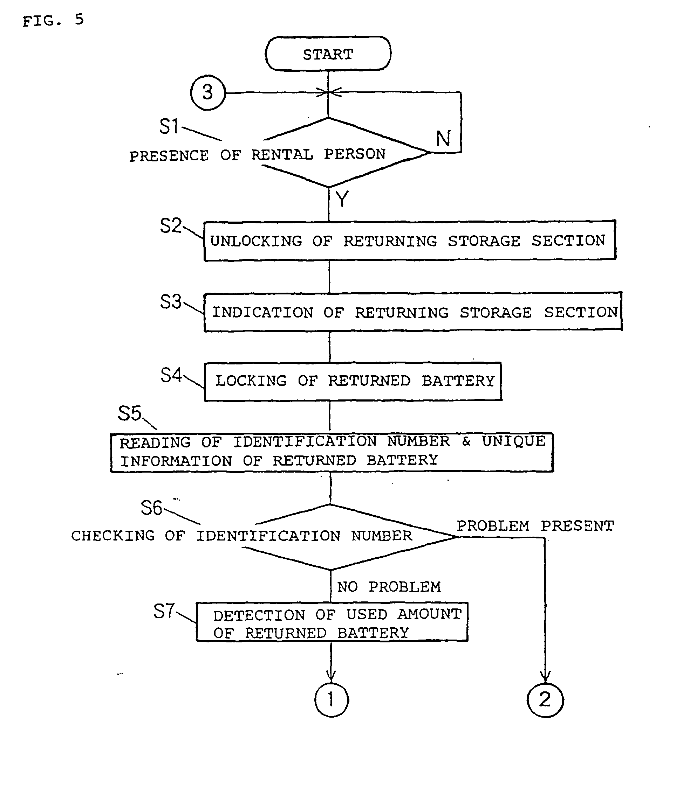

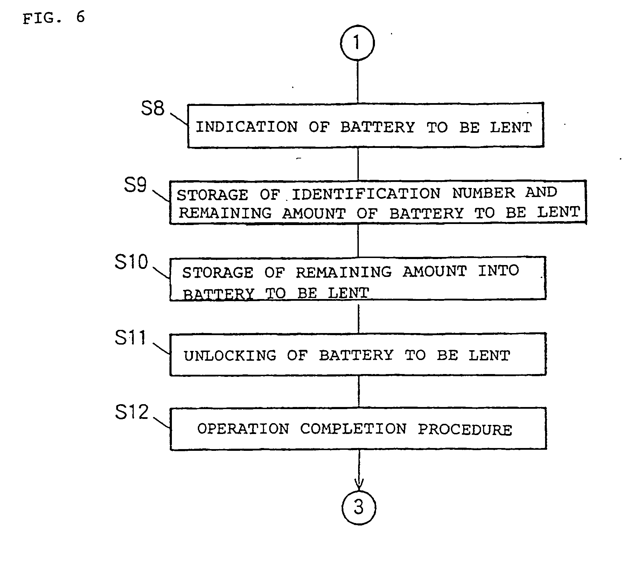

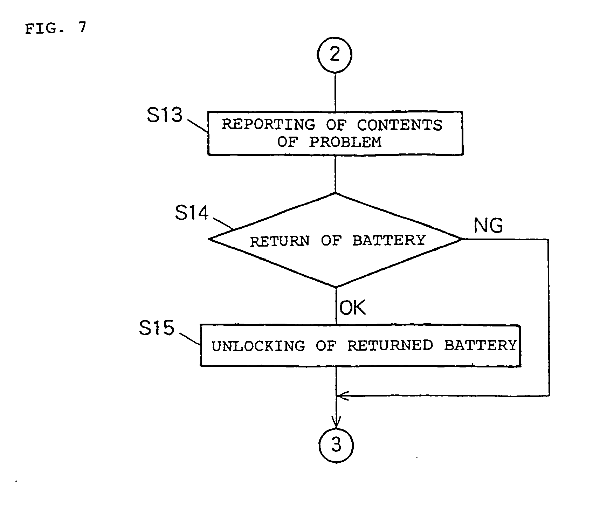

Operation of the unmanned automatic battery rental apparatus 1 is described with reference to FIGS. 5 to 7.

If a person stands in front of the unmanned automatic battery rental apparatus 1, then the person detection sensor 20 detects this (status S1), unlocks the accommodation section 15 to allow delivery/acceptance (status S2), and starts guidance by means of the display unit 17 and the audible indicator 17a (status S3).

For example, such aural guidance as "Welcome! Please insert the used battery into the first bay (or accommodation section)" is performed.

The unmanned automatic battery rental apparatus 1 includes a battery returning accommodation section 15, and if the user inserts a battery into the accommodation section 15, then it locks the battery 7 (status S4), reads the identification number and unique information of the battery 7 returned (status S5), effects checking of the battery identification number (status S6), and investigates whether or not a new battery can be lent.

The unmanned automatic battery rental apparatus 1 confirms that the battery 7 used is returned into the returning accommodation section 15 and a lock pin 12 provided for the battery 7 is inserted to a position to be locked and then the lock pin 12 is locked.

When there is a problem in regard to the identification number, the unmanned automatic battery rental apparatus 1 indicates the reason whey the use is impossible using the display unit 17 and the audible indicator 17a (status S13), and discriminates whether or not the battery 7 returned should be returned back to the user without providing a rental service of a battery (status S14).

If the battery 7 is a stolen battery or the charge due is in arrears, it is kept in the locked condition by the lock pin 12, but where the battery 7 is a battery having no connection with the rental, the locked condition of the battery is cancelled (status S15), and the battery is returned from the accommodation section 15.

If it is determined from the identification number that the battery 7 is a battery for rental having no problem (for example, that the battery 7 is not a stolen battery, that there is no arrear of the toll), then the amount of use of the returned battery 7 is checked and detected (status S7), and further, a procedure for utilization is indicated to the user by means of the display unit 17 and the audible indicator 17a.

Further, the remaining amount when lent and the remaining amount at present of the used battery 7 returned are read out from the storage means of the battery or the central control apparatus 3, and the used amount is calculated. Then, the toll, the latest rental date and hour and so forth are indicated with the audible indicator 17a and the display unit 17, and the identification number and the toll of the returned battery are stored.

The unmanned automatic battery rental apparatus 1 reports, by means of the display unit 17 and the audible indicator 17a, the accommodation section 15 of that one of the batteries 7 arranged in a plurality of stages which has been charged up fully so that it can be provided for the rental service or which has a remaining amount of 70 % or more and can be used (status S8).

For example, aural guidance of "The rate of electricity consumed by you is 500 yen. Please take the battery of the second bay (or accommodation section)." is performed.

Further, the battery identification number and the battery remaining amount of the battery 7 to be lent are stored (status S9).

The battery remaining amount of the battery 7 to be lent is stored into the battery (status S10), and the lock pin 12 provided for the battery 7 to be provided for the rental service is unlocked (status S11) so that the battery 7 can be taken out readily from the accommodation section 15 by the user. It is to be noted that the status S8 may be provided immediately after the status S11.

After the battery 7 is taken out, for example, such aural guidance of operation completion that "Thank you for your utilization." is provided (status S12).

The unmanned automatic battery rental apparatus 1 stores also the return date and hour, the toll, the number of rental times, the latest rental date and hour and so forth of the used battery 7 returned and unique electric data information for charging, and transmits the data to the central control apparatus 3 over the communication line 2. Further, the unmanned automatic battery rental apparatus 1 may transmit the amount of use or the remaining amount of the battery 7.

In this instance, where the battery itself includes communication means, power may be supplied from the unmanned automatic battery rental apparatus 1 to the communication means in the battery to effect communication.

Further, the unmanned automatic battery rental apparatus 1 receives information of an electric processing method corresponding to the data information from the central control apparatus 3, performs electric processing in accordance with an information instruction of the received information and returns data information of a result of the electric processing performed to the central control apparatus 3 over the communication line 2 again.

Further, the unmanned automatic battery rental apparatus 1 includes the alarming apparatus 16 so that it issues alarming sound when some trouble occurs, and further, upon emergency, the unmanned automatic battery rental apparatus 1 can communicate with the location of the central control apparatus 3 or the company of the battery rental system in contract by means of an interphone call switch 21.

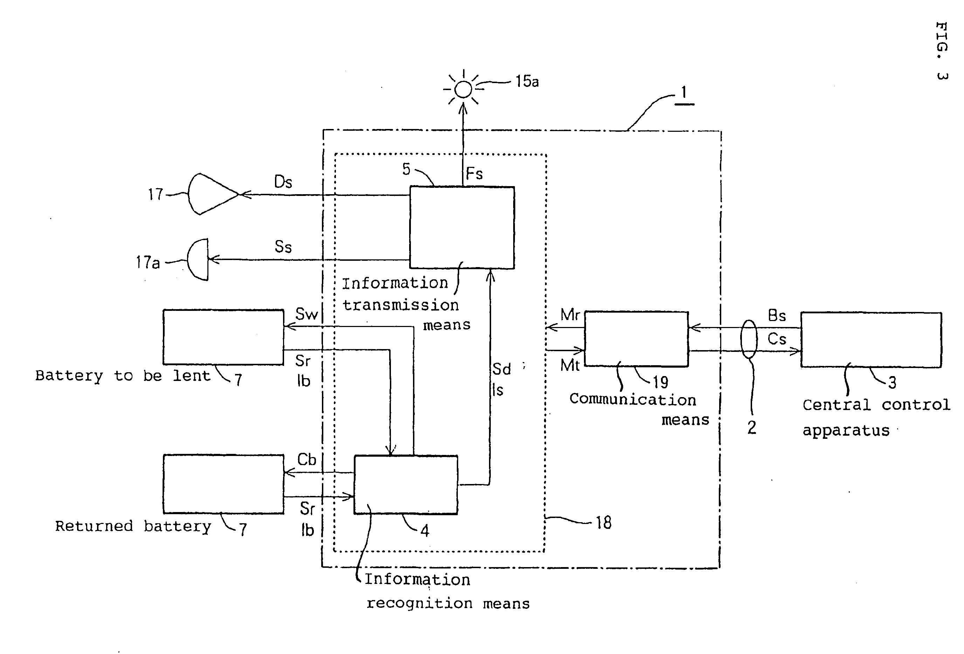

The unmanned automatic battery rental apparatus 1 in Fig. 3 includes control means 18 and communication means 19. The control means 18 includes information recognition means 4 and information transmission means 5.

The information recognition means 4 includes a reader/writer or the like which includes circuits for a saturation characteristic, overwriting, a resolution, a playback output and so forth, and a magnetic head. Consequently, the information recognition means 4 can access stored information of a battery 7.

The information recognition means 4 bidirectionally transmits information to and from the communication means 7T in the battery, performs checking of the battery identification number by means of the reader of the information recognition means 4, and investigates whether or not the battery 7 is in a normal rental condition.

The information recognition means 4 reads, if it is discriminated that the battery 7 is in a normal rental condition, a read signal Sr such as the rental ID of the user, the year, month, day and hour of the latest rental, the updating date and so forth stored in the battery 7, and a recognition signal Sd of the information and the data to the information transmission means 5.

Further, the information recognition means 4 writes the year, month, day and hour of the latest rental, the battery remaining amount and so forth of the lent battery 7 to be lent into the battery to be lent using a write signal Sw, and supplies a recognition signal Sd of the information and the data to the information transmission means 5.

Before the battery is lent, the identification number of the battery, the battery remaining amount, other histories of the battery and so forth are read as read signals Sr, battery signal Ib by the reader, and recognition signals Sd, information signal Is are supplied to the information transmission means 5.

The information transmission means 5 supplies signals Ds, Ss and Fs for controlling the display unit 17 such as an LCD, a CRT, an LED or an EL, the audible indicator 17a such as a speaker and the accommodation section indication lamp 15a for indication by mans of an LED or a lamp at an upper portion of the accommodation section 15, respectively.

The information transmission means 5 supplies the display signal Ds to the display unit 17.

The information transmission means 5 supplies the sound signal Ss to the audible indicator 17a.

The information transmission means 5 supplies the flickering signal Fs to the accommodation section indication lamp 15a.

The information recognition means 4 reads also data of the history of use of the battery 7 stored in storage means 7A in the battery 7.

Further, the unmanned automatic battery rental apparatus 1 includes terminal connectors (not shown) and effects measurement of an electric characteristic and charging of a battery 7.

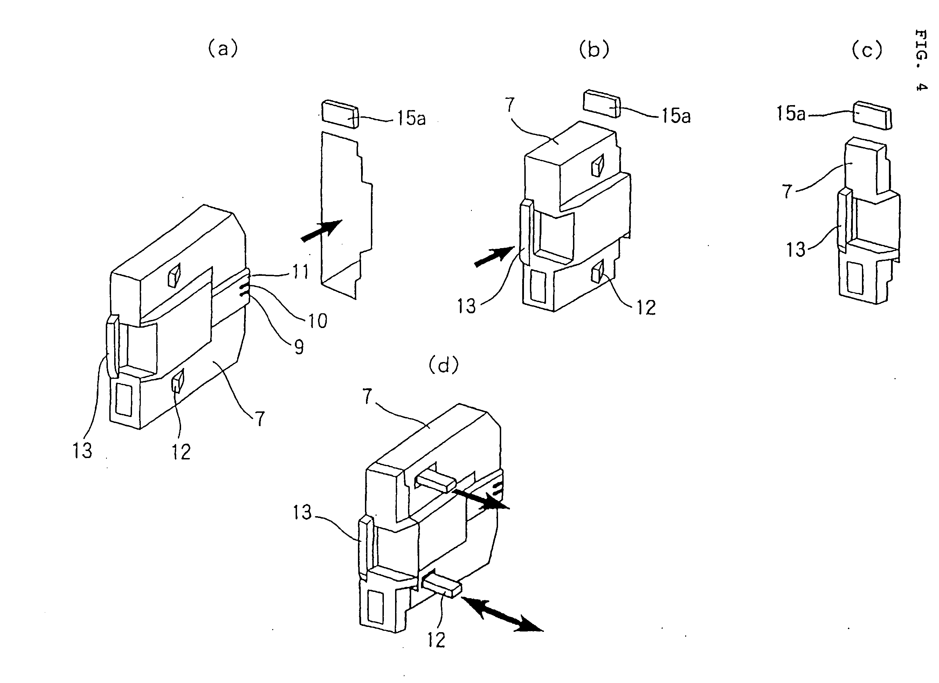

The information recognition means 4 measures a battery remaining amount and so forth from the terminal connectors corresponding to terminals 9, 10 and 11 (refer to FIG. 4) of the battery 7 and obtains a battery signal Ib, and performs processing necessary for charging corresponding to the battery signal Ib in accordance with a charge signal Cb from the terminal connectors corresponding to the terminals 9, 11 of the battery 7.

The information recognition means 4 acquires unique information of the battery 7 such as the battery temperature and the stored information of the storage means 7A also from the battery signal Ib.

The information recognition means 4 supplies the unique information read from the battery 7 as the information signal Is to the information transmission means 5.

The communication means 19 of the unmanned automatic battery rental apparatus 1 is formed from a bidirectional transmitter such as, for example, a modem composed of a modulation circuit, a clock circuit, a transmission circuit, a photo-coupler and so forth.

The communication means 19 modulates an information signal Mt composed of a read signal Sr from the information recognition means 4 and a battery signal Ib from the information recognition means 4 and supplies, for example, a transmission signal Cs as a pulse signal or the like to the central control apparatus 3 over the communication line 2.

Further, the communication means 19 demodulates a reception signal Bs such as, for example, a pulse signal supplied from the central control apparatus 3 over the communication line 2 and supplies a processing signal Mr to the control means 18.

Based on the processing signal Mr, the information recognition means 4 in the control means 18 supplies a charge signal Cb to the battery 7.

Meanwhile, where the number of times of charging and discharging operations within a predetermined period of time is excessively large, charging of the battery 7 may not be performed, or the rental service of a battery 7 to the user may not be performed.

The central control apparatus 3 receives the transmission signal Cs regarding data of the unmanned automatic battery rental apparatus 1 over the communication line 2 and supplies a reception signal Bs regarding data necessary for the unmanned automatic battery rental apparatus 1 to the unmanned automatic battery rental apparatus 1 over the communication line 2.

The central control apparatus 3 includes a computer and performs centralized control, and effects management of users, rental batteries, the unmanned automatic battery rental apparatus 1, measurement and execution instruction for charging of a battery 7, the battery lives, collection of the toll and so forth.

The central control apparatus 3 performs database management of the rental IDs of users, the identification numbers and the remaining amounts when lent of the lent batteries, the remaining amounts when returned, the used amounts, the addresses, the ages, the telephone numbers, the sexes, the contract account numbers, the numbers of rental times, the tolls and so forth as information of the rental persons.

The central control apparatus 3 performs database management of the batteries such as the sales of batteries, the utilization numbers of times, the numbers of times of charging and discharging operations, the dates and hours of charging, the amounts of charging and discharging, and the lives, the necessity for exchange and so forth from those data.

Further, the central control apparatus 3 manages data of the operating rate and the turnover rate of each unmanned automatic battery rental apparatus 1, the ranges of action of users, and utilization situations, the business deployment in the future and so forth by patterns.

According to Fig. 4, the battery 7 includes the power supplying positive terminal 9, the terminal 10 for electric measurement, and the power supplying negative terminal 11.

Further, the battery 7 includes a handle 13 for being gripped when the battery 7 is to be pulled out from the accommodation section 15 of an unmanned automatic battery rental apparatus 1, and a lock pin 12 for mechanical locking.

It is to be noted that the terminal 10 for electric measurement may be composed of a plurality of terminals.

The storage means 7A stores the identification number and unique information of the battery 7.

The unique information is composed of data of the return date and hour, the number of times of charging and discharging operations, the rental date and hour (date and hour of lending), the battery temperature, and the battery remaining amount, and so on. The battery identification number is composed of the production number, the production year, month and day, and so forth.

It is to be noted that the unique information may include the battery identification number, and the unique information may include the rental ID.

The unique information of the battery 7 is supplied to an unmanned automatic battery rental apparatus 1 by communication between the information transmission means 5 and the communication means 19 through the terminal 10 for electric measurement.

Measurement of the battery remaining amount or charging is performed using the power supplying positive terminal 9 and the power supplying negative terminal 11.

The battery 7 includes a lock pin 12, and if it is inserted into the returning accommodation section 15 of the unmanned automatic battery rental apparatus 1, then the lock pin 12 is mechanically erected uprightly and the battery 7 is locked.

On the other hand, a battery 7 charged up already can be pulled out readily from an accommodation section 15 by the handle 13 as the lock pin 12 is pushed back by a returning metal member in the accommodation section 15 in response to a cancellation signal of the unmanned automatic battery rental apparatus 1.

In figure 4:
- (a) is an explanatory view explaining a condition wherein a used battery 7 for returning is inserted into an accommodation section 15 on which the accommodation section indication lamp 15a is flickering.
- (b) is an explanatory view explaining an intermediate condition during insertion, which is a condition wherein the lock pin 12 is not projected as shown in FIG. 4(d).
- (c) is an explanatory view explaining a condition wherein the used battery 7 for returning is pushed in fully, which is a condition wherein the lock pin

12 is projected and the battery 7 is locked.

A bar code may be applied to a side face of the battery 7 while a bar code reader is provided in the unmanned automatic battery rental apparatus (battery exchanging apparatus) 1 to further add information for identification of the battery 7.

In this manner, in the battery rental system, if the unmanned automatic battery rental apparatus 1 recognizes a user, then it reports a procedure of use and an accommodation section 15 for returning to the user by voice and the display unit 17 by the information transmission means 5 and causes the accommodation section indication lamp 15a at an upper portion of the accommodation section 15 to flicker.

Further, in the battery rental system, if it is confirmed that a used battery 7 for returning is inserted and the lock pin 12 is locked, then the information recognition means 4 recognizes the battery identification number and the battery remaining amount when lent of the used battery 7 for returning, and the battery remaining amount at present is measured from the battery terminals and the electricity rate is reported to the user by voice and the display unit 17.

Further, the battery rental system reports the accommodation section 15 in which a battery 7 charged up already is accommodated to the user by voice and the display unit 17 again and causes the accommodation section indication lamp 15a at an upper portion of the accommodation section 15 to flicker to report it, and unlocks the lock pin 12 of the battery 7 charged up already.

Further, the battery rental system stores the remaining amount when lent of the battery 7 charged up already into the battery 7, stores the battery identification number, the remaining amount when lent, the rental date and hour, the returned day and hour and the toll of the battery, and outputs a message of completion of operation to the user by voice and the display unit again.

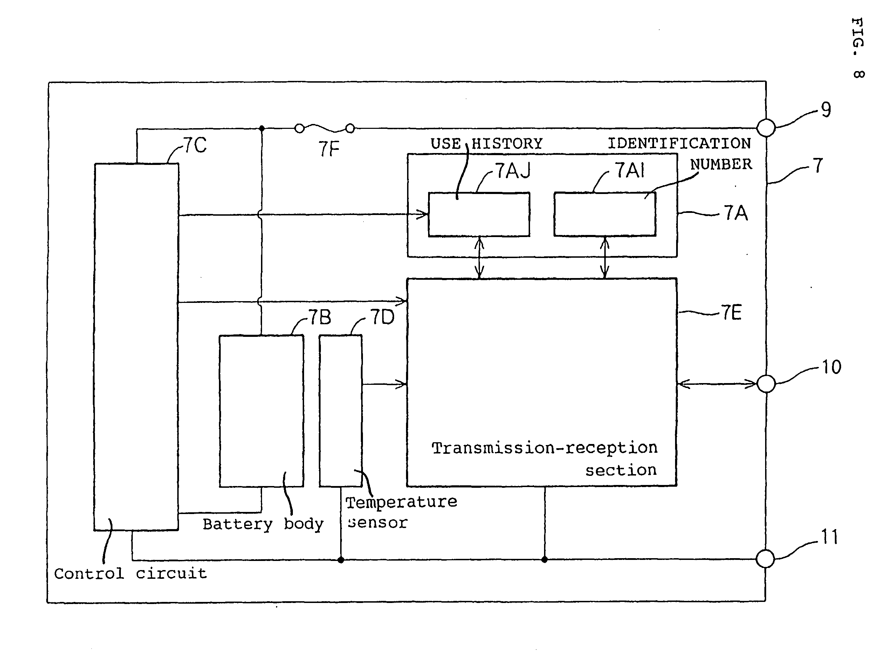

Battery 7 in Fig. 8 includes a control circuit 7C, a battery body 7B, a temperature sensor 7D, storage means 7A, a transmission-reception section 7E, and a fuse 7F.

Further, the battery 7 includes a power supplying positive terminal 9, a terminal 10 for electric measurement, and a power supplying negative terminal (grounding terminal) 11.

The power supplying positive terminal 9 is connected to the control circuit 7C and the battery body 7B through the fuse 7F.

The battery body 7B is composed of a nickel-cadmium cell or the like which allows repetitive charging.

The control circuit 7C includes a plurality of LEDs or a bar graph meter, and detects the battery remaining amount of the battery body 7B and displays it by the LEDs or the bar graph meter. Further, the control circuit 7C supplies a remaining amount detection signal representative of the battery remaining amount to the transmission-recepti on section 7E.

The control circuit 7C detects an abnormal condition of the battery body 7B and supplies an abnormal condition detection signal to the transmission-reception section 7E.

A negative terminal of the battery body 7B is connected to the control circuit 7C and is connected to the power supplying negative terminal 11 through a short-circuiting resistor (shunt resistor) in the control circuit 7C.

The storage means 7A includes a memory 7AJ for storing a use history of the battery 7, and a memory 7AI for storing the battery identification number.

The memory 7AJ may store the return date and hour as the use history, or may store the number of times of charging and discharging operations within a fixed period of time, or may store the rental date and hour (date and hour of lending), or may store them in combination.

The storage means 7A may store unique information (the remaining amount (the remaining amount when lent, the remaining amount at present), the number of times of charging and discharging operations, the number of times of use and so forth) into the memory 7AJ or the memory 7AI.

The control circuit 7C supervises the voltage between the terminals of the battery body 7B, and supplies, if it detects that the battery body 7B has been charged, a charge detection signal representative of a charged up condition to the memory 7AJ. The memory 7AJ stores that the charge detection signal has been received.

The temperature sensor 7D detects the temperature of the battery body 7B and supplies a temperature detection signal representative of the temperature to the transmission-reception section 7E.

The data of the use history and the data of the battery identification number of the storage means 7A can be accessed from the transmission-reception section 7E.

The transmission-reception section 7E transmits data of the use history from the memory 7AJ, data of the battery identification number from the memory 7AI, data based on a failure detection signal and a remaining amount detection signal from the control circuit 7C, data based on a temperature detection signal from the temperature sensor 7D and so forth or stored information of the storage means 7A or the like to the outside of the battery 7 through the terminal 10 for electric measurement.

However, the control circuit 7C may be constructed such that the remaining amount detection signal is not supplied to the transmission-reception section 7E and may be constructed such that the battery remaining amount is detected through the terminal connector by the unmanned automatic battery rental apparatus 1.

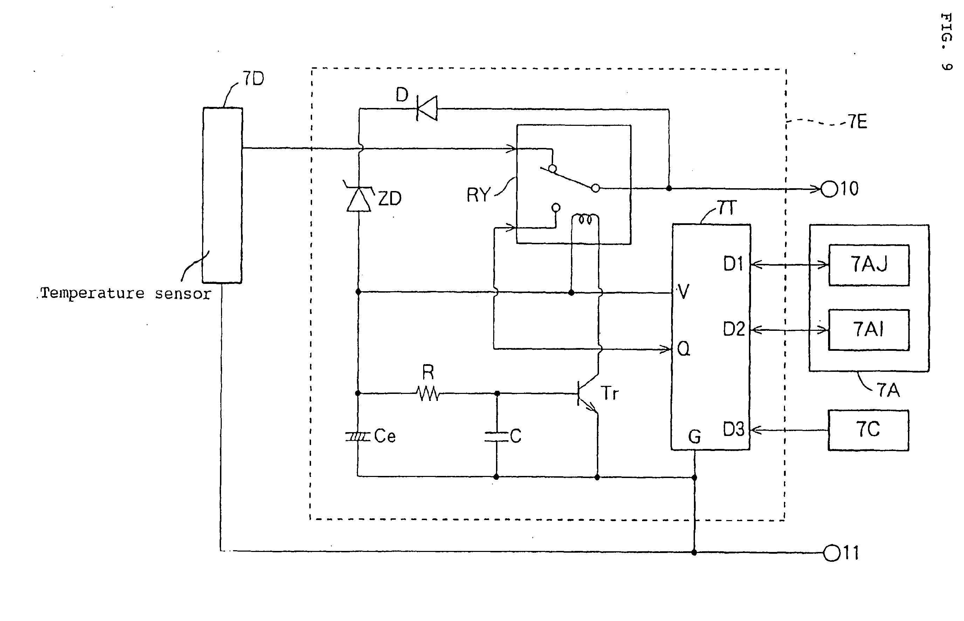

With regard Fig. 9 the transmission-reception section 7E includes a relay RY, a diode D, a Zener diode ZD, a resistor R, an electric field capacitor Ce, a capacitor C, a transistor Tr, and communication means 7T.

A common contact of the relay RY is connected to the terminal 10 for electric measurement, and a break contact of the relay RY is connected to the temperature sensor 7D while a make contact of the relay RY is connected to a Q terminal of the communication means 7T.

An output signal of the temperature sensor 7D is supplied to the terminal 10 for electric measurement.

Meanwhile, if a positive potential higher than a breakdown voltage is applied for only a short period of time from the outside (for example, an unmanned automatic battery rental apparatus 1) to the terminal 10 for electric measurement, then the electric field capacitor Ce is charged and a voltage is applied to a power supply terminal V of the communication means 7T so that the communication means 7T is activated.

By using the electric field capacitor Ce as a power supply to make use of charging and discharging of the same and turning the transistor Tr on only for a predetermined time which depends upon the resistor R and the capacitor C, the relay RY is turned on only for the predetermined period of time.

Consequently, a movable element of the relay RY is moved to disconnect the temperature sensor 7D and the terminal 10 for electric measurement from each other while the terminal 10 for electric measurement and the communication terminal Q of the communication means 7T are connected to each other for the predetermined period of time.

From the terminal 10 for electric measurement, data (or stored information) of the storage means 7A and data from the control circuit 7C (or the control circuit 7C itself) can be accessed for the predetermined period of time through the communication means 7T.

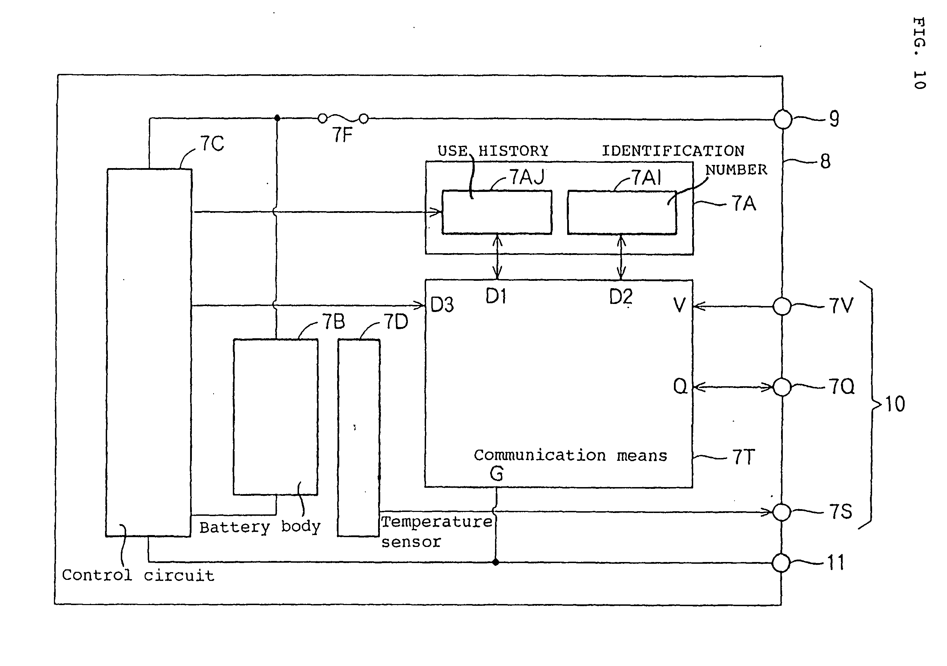

battery 8 in Fig. 10. includes a control circuit 7C, a battery body 7B, a temperature sensor 7D, storage means 7A, communication means 7T, and a fuse 7F.

Further, the battery 8 includes a power supplying positive terminal 9, a terminal 10 for electric measurement and a power supplying negative terminal (grounding terminal) 11.

The terminal 10 for electric measurement of FIG. 10 is composed of a plurality of terminals and includes a power supplying terminal 7V for the communication means 7T, a terminal 7Q connected to the communication terminal Q of the communication means 7T, and a terminal 75 for outputting a temperature detection signal 7S from the temperature sensor 7D.

The power supplying positive terminal 9 is connected to the control circuit 7C and the battery body 7B through the fuse 7F.

The battery body 7B is formed from a nickel-cadmium cell or the like which allows repetitive charging.

The control circuit 7C includes a plurality of LEDs or a bar graph meter, and detects and indicates the battery remaining amount of the battery body 7B by the LEDs or the bar graph meter and supplies a remaining amount detection signal representative of the battery remaining amount to (a terminal D3 of) the communication means 7T.

The control circuit 7C detects an abnormal condition of the battery body 7B and supplies an abnormal condition detection signal to (the terminal D3 of) the communication means 7T.

The negative terminal of the battery body 7B is connected to the control circuit 7C and connected to the power supplying negative terminal 11 through a short-circuiting resistor (shunt resistor) in the control circuit 7C.

However, the control circuit 7C may be constructed such that it does not supply the remaining amount detection signal to the communication means 7T and may be constructed such that the battery remaining amount is detected through the terminal connector by the unmanned automatic battery rental apparatus 1.

The storage means 7A includes a memory 7AJ for storing a use history of the battery 7, and a memory 7AI for storing the battery identification number.

The memory 7AJ may store, as the use history, the return date and hour, may store the number of times of charging and discharging operations within a fixed period, may store the rental date and hour (date and hour of the lending), or may store them in combination.

The storage means 7A may store also unique information (the remaining amount when lent, the remaining amount at present), the number of times of charging and discharging operations, the number of times of use and so forth) in the memory 7AJ or the memory 7AI.

The control circuit 7C supervises the voltage between the terminals of the battery body 7B, and if it detects that the battery body 7B has been charged, then it supplies a charge detection signal representative of a full charge to the memory 7AJ.

The temperature sensor 7D detects the temperature of the battery body 7B and outputs a temperature detection signal representative of the temperature to the terminal 7S.

The data of the use history and the data of the battery identification number of the storage means 7A can be accessed from the communication means 7T.

The communication means 7T transmits data of the use history from the memory 7AJ, data of the battery identification number from the memory 7AI, data based on a failure detection signal and a remaining amount detection signal from the control circuit 7C, data based on a temperature detection signal from the temperature sensor 7D and so forth or stored information of the storage means 7A to the outside of the battery 7 through (particularly the terminal 7Q and the terminal 7S of) the terminal 10 for electric measurement.

For example, the communication means 7T may be constructed such that it transmits to an unmanned automatic rental apparatus 1 or may be constructed such that it transmits directly to the central control apparatus 3.

With the battery rental system of FIG. 1, since a battery at least stores an identification number of the battery and the central control apparatus stores a rental person and the identification number of a battery of rental (lent) as well as a use amount of a returned battery, an operation to input a rental person ID and so forth or insert an ID card when a battery is to be returned or lent is eliminated, and it can be performed that a plurality of batteries are used commonly by a rental person.

With the battery rental system of FIG. 1, since it includes communication means in a battery so that, when batteries are returned by and/or lent to a plurality of rental persons, the communication means of the batteries can individually access the central control apparatus, the returning and lending operations can be performed smoothly.

With the battery rental system of FIG. 1, since a battery stores a use history of the battery, the use amount of a returned battery can be stored rapidly into the central control apparatus and besides the number of times of charging and discharging operations and the number of times of use within a predetermined period of time can be detected. Further, lending of a battery can be performed rapidly, and it is possible to make use of it for maintenance of the battery.

Further, since also a history in such a case that a rental person charges using a charger of itself can be grasped accurately, this is further advantageous for maintenance of the battery.

With the battery rental system of FIG. 1, since the switching means switchably outputs an output signal from the temperature sensor and an output signal from the communication means, the terminals of a battery can be used commonly and the number of the terminals of the battery can be reduced.

With the battery rental system of FIG. 1, since the communication means is driven with power supply supplied from a battery exchanging apparatus, even when the voltage of the battery itself is low, the reliability in operation of the communication can be augmented, and the reliability of information from the communication means can be augmented.

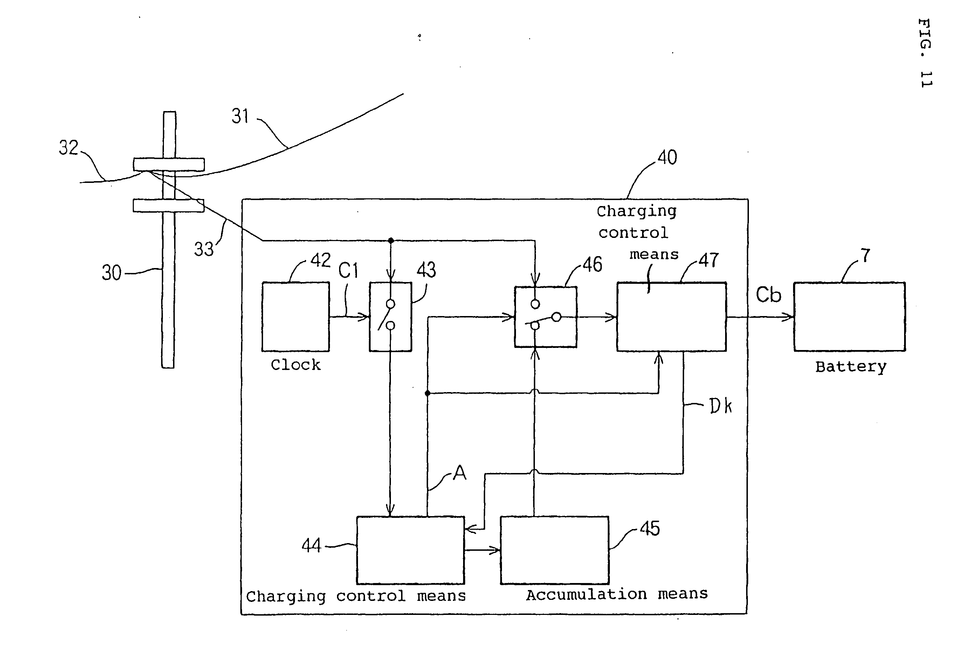

The information recognition means 4 of an unmanned automatic battery rental apparatus 1 includes the battery charging apparatus according to the present invention shown in Fig. 11.

The battery charging apparatus 40 of FIG. 11 includes a clock 42, a switch 43, charging control means 44, accumulation means 45 for accumulating night power, a changeover switch 46 such as a relay, and charging control means 47. The accumulation means 45 may include a battery or a capacitor.

The battery charging apparatus 40 charges a battery 7 for an electrically-operated vehicle or the like in response to a charge signal Cb with the night power accumulated in the accumulation means 45.

To the battery charging apparatus 40, commercial power supply is supplied over a power cable 33 connected to transmission lines 31, 32. It is to be noted that reference numeral 30 in the figure denotes an electric pole.

The clock 42 at night supplies a night signal C1 to the switch 43.

The clock 42 does not supply the night signal C1 to the switch 43 in the daytime.

The switch 43 is switched off to disconnect the power cable 33 and the charging control means 44 from each other when the night signal C1 is not supplied thereto.

The switch 43 is switched on, when the night signal C1 is supplied thereto, to connect the power cable 33 and the charging control means 44 to each other so that commercial power supply is supplied to the charging control means 44.

The charging control means 44 is constructed such that it rectifies the commercial power supply from ac to dc and supplies night power to the accumulation means 45 and further measures the power accumulated in the accumulation means 45.

A break contact of the changeover switch 46 is connected to an output terminal of the accumulation means 45.

A make contact of the changeover switch 46 is connected to the power cable 33.

A common contact of the changeover switch 46 is connected to the charging control means 47.

The charging control means 47 is constructed such that it rectifies the commercial power supply from the changeover switch 46 from ac into dc and supplies the power to the battery 7 to charge it, and measures the power accumulated in the battery 7.

Further, the charging control means 47 supplies a power detection signal Dk representative of the measured power to the charging control means 44.

The charging control means 44 recognizes the charge amount (or remaining amount) of the battery 7 based on the power detection signal Dk, and if it detects that the battery 7 cannot be charged sufficiently (to a so-called charged up condition) with the power accumulated in the accumulation means 45, then it supplies a shortage detection signal A to the changeover switch 46 and the charging control means 47.

The charging control means 44 supplies, if it detects based on the power detection signal Dk that the battery 7 can be charged fully or has been successfully charged fully, no shortage detection signal A to the changeover switch 46 and the charging control means 47.

The changeover switch 46 is switched on if it receives supply of the shortage detection signal A, and supplies commercial power supply to the charging control means 47.

The changeover switch 46 is turn off if it receives no supply of the shortage detection signal A, and supplies the night power accumulated in the accumulation means 45 to the charging control means 47.

The charging control means 47 charges the battery 7 using the commercial power supply when it receives supply of the shortage detection signal A. Accordingly, at night, the battery charging apparatus 40 has a construction that it charges the battery 7 and the accumulation means 45 simultaneously.

The charging control means 47 charges, when it does not receive supply of the shortage detection signal A, the battery 7 using the night power from the accumulation means 45.

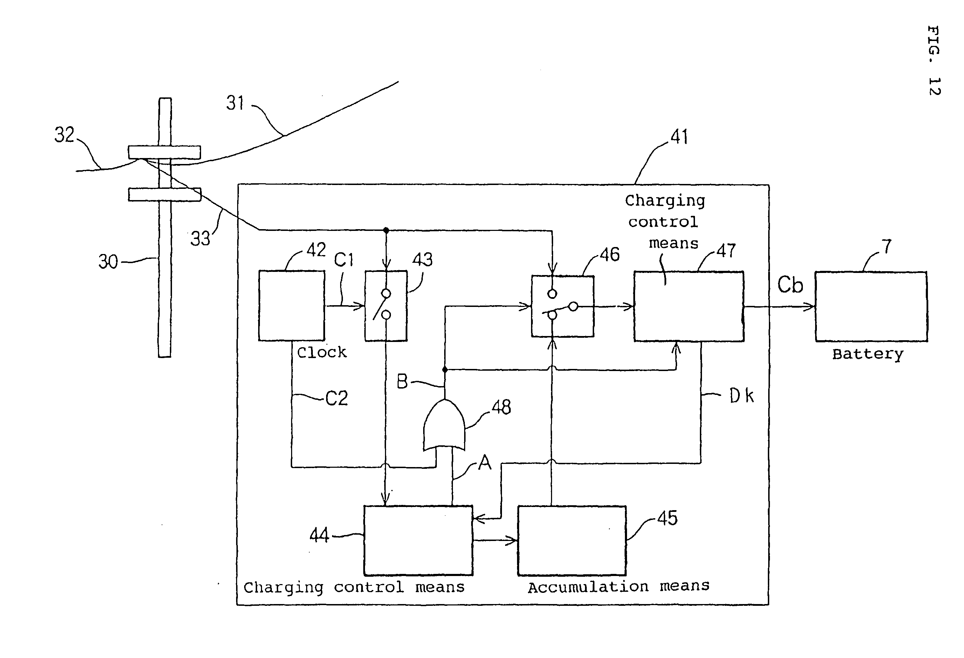

The battery charging apparatus 41 in Fig. 12 has a construction modified from that of the battery charging apparatus 40 of FIG. 11 such that a daybreak signal C2 from the clock 42 and the shortage detection signal A are logically ORed by an OR circuit 48 and an output signal B of the OR circuit 48 is supplied to the changeover switch 46 and the charging control means 47.

The clock 42 supplies the daybreak signal C2 to the OR circuit 48 at a time from the midnight to the daytime.

The clock 42 does not supply the daybreak signal C2 to the OR circuit 48 other than a time from the midnight to the daytime.

The OR circuit 48 supplies the output signal B to the changeover switch 46 and the charging control means 47 when the daybreak signal C2 or the shortage detection signal A is supplied thereto.

The changeover switch 46 is switched on when it receives supply of the output signal B, and supplies commercial power supply to the charging control means 47.

The changeover switch 46 is switched off when it receives no supply of the output signal B, and supplies the night power accumulated in the accumulation means 45 to the charging control means 47.

The charging control means 47 charges a battery 7 using the commercial power supply when it receives supply of the output signal B. Accordingly, at a time from the midnight to the daytime, the battery charging apparatus 41 has a construction wherein it charges a battery 7 using commercial power supply.

The charging control means 47 charges a battery 7 using the night power from the accumulation means 45 when it receives no supply of the output signal B.

While, in the present embodiment, an example wherein a battery 7 of an electrically-operated vehicle is charged is described, a vehicle-carried battery for an electric automobile or for an electrically-operated bicycle may be charged, or a driving battery for a motor-assist bicycle may be charged.

The invention provides a battery charging apparatus which can suppress power consumption in the daytime. To achieve this, a battery charging apparatus 40 for charging a battery 7 for an electrically-operated vehicle includes accumulation means 45 for accumulating night power, and the battery charging apparatus 40 charges a battery 7 with the night power accumulated in the accumulation means 45.

The accumulation means 45 may be constructed such that it accumulates midnight power and, from the midnight to the daytime, charges a battery 7 using commercial power supply.

## Claims

1. A battery charging apparatus (40) for charging a battery (7) with night power supplied by a commercial power supply (2), wherein the rate of the night power is less expensive than that in the daytime, comprising:
- accumulation means (45) for accumulating the night power;
- a switch (43) for connecting the commercial power supply (2) to a first charging control means (44) in response to a night signal (C1) supplied by a clock (42) but not in the daytime;
wherein the first charging control means (44) has means to rectify the commercial power supply from ac to dc and to supply the night power to the accumulation means (45) and further means to measure the power accumulated in the accumulation means (45);
wherein a break contact of a changeover switch (46) is connected to an output terminal of the accumulation means (45), a make contact of the changeover switch (46) is connected to the commercial power supply (2), and a common contact of the changeover switch (46) is connected to a second charging control means (47);
wherein the second charging control means (47) has means to rectify the commercial power supply from the changeover switch (46) from ac into dc and to supply the power to the battery (7) to charge it, and further means to measure the power accumulated in the battery (7), and to supply a power detection signal (Dk) representative of the measured power to the first charging control means (44);
wherein the first charging control means (44) is configured to recognize the charge amount or remaining account of the battery (7) based on the power detection signal (Dk), and if it detects that the battery (7) cannot be charged sufficiently with the power accumulated in the accumulation means (45), to supply a shortage detection signal (A) to the changeover switch (46) and the second charging control means (47);
wherein the first charging control means (44) is configured to supply, if it detects based on the power detection signal (Dk) that the battery (7) can be charged fully or has been successfully charged fully, no shortage detection signal (A) to the changeover switch (46) and the second charging control means (47);
wherein the changeover switch (46) is is configured to switch on if it receives supply of the shortage detection signal (A), and to supply commercial power supply to the second charging control means (47), but to turn off if it receives no supply of the shortage detection signal (A) and to supply the night power accumulated in the accumulation means (45) to the second charging control means (47);
wherein the second charging control means (47) is configured to charge the battery (7) using the commercial power supply when it receives supply of the shortage detection signal (A) so that, at night, the battery charging apparatus (40) charges the battery (7) and the accumulation means (45) simultaneously, and to charge, when it does not receive supply of the shortage detection signal (A), the battery (7) using the night power from the accumulation means (45).

2. A battery charging apparatus (40) for charging a battery (7) with night power supplied by a commercial power supply (2), wherein the rate of the night power is less expensive than that in the daytime, comprising:
- accumulation means (45) for accumulating the night power;
- a switch (43) connecting the commercial power supply (2) to a first charging control means (44) in response to a night signal (C1) supplies by a clock (42) but not in the daytime;
wherein the first charging control means (44) has means to rectify the commercial power supply from ac to dc and to supply, the night power to the accumulation means (45) and further means to measure the power accumulated in the accumulation means (45);
wherein a break contact of a changeover switch (46) is connected to an output terminal of the accumulation means (45), a make contact of the changeover switch (46) is connected to the commercial power supply (2), and a common contact of the changeover switch (46) is connected to a second charging control means (47);
wherein the second charging control means (47) has means to rectify the commercial power supply from the changeover switch (46) from ac to dc and to supply the power to the battery (7) to charge it, and further means to measure the power accumulated in the battery (7), and to supply a power detection signal (Dk) representative of the measured power to the first charging control means (44),
wherein the first charging control means is configured to (44) recognize the charge amount or remaining amount of the battery (7) based on the power detection signal (Dk), and if it detects that the battery (7) cannot be charged sufficiently with the power accumulated in the accumulation means (45), to supply a shortage detection signal (A);
wherein the first charging control means (44) is configured to supply if it detects based on the power detection signal (Dk) that the battery (7) can be charged fully or has been successfully charged fully, no shortage detection signal (A);
wherein a daybreak signal (C2) from the clock (42) and the shortage detection signal (A) are logically ORed by an OR circuit (48) and an output signal (B) of the OR circuit (48) is supplied to the changeover switch (46) and the second charging control means (47);
wherein the clock (42) is configured to supply the daybreak signal (C2) to the OR circuit (48) at a time from the midnight to the daytime, but not at other time ; and
wherein the OR circuit (48) is configured to supply the output signal (B) to the changeover switch (46) and the second charging control means (47) when the daybreak signal (C2) or the shortage detection signal (A) is supplied thereto;
wherein the changeover switch (46) is configured to switch on when it receives supply of the output signal (B), and to supply commercial power supply to the second charging control means (47), but to switch off when it receives no supply of the output signal (B), and to supply the night power accumulated in the accumulation means (45) to the second charging control means (47);
wherein the second charging control means (47) is configured to charge the battery (7) using the commercial power supply when it receives supply of the output signal (B) so that, at a time from the midnight to the daytime, the battery charging apparatus (41) charges the battery (7) using commercial power supply; and to charge the battery (7) using the night power from the accumulation means (45) when it receives no supply of the output signal (B).

## Patentansprüche

1. Batterieladevorrichtung (40) zum Laden einer Batterie (7) mit von einer öffentlichen Stromversorgung (2) zugeführtem Nachtstrom, worin der Preis des Nachtstroms weniger teuer ist als jener in der Tageszeit, umfassend:
- Akkumulationsmittel (45) zum Akkumulieren des Nachtstroms;
- einen Schalter (43) zum Verbinden der öffentlichen Stromversorgung (2) mit einem ersten Ladesteuermittel (44) in Antwort auf ein Nachtsignal (C1), das von einer Uhr (42) zugeführt wird, aber nicht in der Tageszeit;
worin das erste Ladesteuermittel (44) ein Mittel aufweist, um die öffentliche Stromversorgung von Wechselstrom zu Gleichstrom gleichzurichten und um den Nachtstrom dem Akkumulationsmittel (45) zuzuführen, und ferner ein Mittel zum Messen der in dem Akkumulationsmittel (45) akkumulierten Energie;
worin ein Unterbrechungskontakt eines Umschalters (46) mit einem Ausgangsanschluss des Akkumulationsmittels (45) verbunden ist, wobei ein Stellkontakt des Umschalters (46) mit der öffentlichen Stromversorgung (2) verbunden ist und ein gemeinsamer Kontakt des Umschalters (46) mit einem zweiten Ladesteuermittel (47) verbunden ist;
worin das zweite Ladesteuermittel (47) ein Mittel aufweist, um die öffentliche Stromversorgung von dem Umschalter (46) von Wechselstrom in Gleichstrom gleichzurichten und um den Strom der Batterie (7) zuzuführen, um diese zu laden, und ferner ein Mittel aufweist, um die in der Batterie (7) akkumulierte Energie zu messen und um ein Energieerfassungssignal (Dk), das die gemessene Energie repräsentiert, dem ersten Ladesteuermittel (44) zuzuführen;
worin das erste Ladesteuermittel (44) konfiguriert ist, um die Lademenge oder die Restladung der Batterie (7) basierend auf dem Energieerfassungssignal (Dk) zu erkennen, und wenn es erkennt, dass die Batterie (7) mit der in dem Akkumulationsmittel (45) akkumulierten Energie nicht ausreichend geladen werden kann, dem Umschalter (46) und dem zweiten Ladesteuermittel (47) ein Mangelerfassungssignal (A) zuzuführen;
worin das erste Ladesteuermittel (44) konfiguriert ist, um dann, wenn es basierend auf dem Energieerfassungssignal (Dk) erkennt, dass die Batterie vollständig geladen werden kann oder erfolgreich vollständig geladen worden ist, dem Umschalter (46) und dem zweiten Ladesteuermittel (47) kein Mangelerfassungssignal (A) zuzuführen;
wobei der Umschalter (46) konfiguriert ist, um einzuschalten, wenn er die Zufuhr des Mangelerfassungssignals (A) erhält, und um die öffentliche Stromversorgung dem zweiten Ladesteuermittel (47) zuzuführen, aber um auszuschalten, wenn er die Zufuhr des Mangelerfassungssignals (A) nicht erhält und um dem zweiten Ladesteuermittel (47) den in dem Akkumulationsmittel (45) akkumulierten Nachtstrom zuzuführen;
worin das zweite Ladesteuermittel (47) konfiguriert ist, um die Batterie (7) mittels der öffentlichen Stromversorgung zu laden, wenn es die Zufuhr des Mangelerfassungssignals (A) erhält, so dass in der Nacht die Batterieladevorrichtung (40) die Batterie (7) und das Akkumulationsmittel (45) gleichzeitig lädt, und um die Batterie mittels dem Nachtstrom von dem Akkumulationsmittel zu laden, wenn es die Zufuhr des Mangelerfassungssignals (A) nicht erhält.

2. Batterieladevorrichtung (40) zum Laden einer Batterie (7) mit von einer öffentlichen Stromversorgung (2) zugeführtem Nachtstrom, worin der Preis des Nachtstroms weniger teuer ist als jener in der Tageszeit, umfassend:
- Akkumulationsmittel (45) zum Akkumulieren des Nachtstroms;
- einen Schalter (43) zum Verbinden der öffentlichen Stromversorgung (2) mit einem ersten Ladesteuermittel (44) in Antwort auf ein Nachtsignal (C1), das von einer Uhr (42) zugeführt wird, aber nicht in der Tageszeit;
worin das erste Ladesteuermittel (44) ein Mittel aufweist, um die öffentliche Stromversorgung von Wechselstrom zu Gleichstrom gleichzurichten und um den Nachtstrom dem Akkumulationsmittel (45) zuzuführen, und ferner ein Mittel zum Messen der in dem Akkumulationsmittel (45) akkumulierten Energie;
worin ein Unterbrechungskontakt eines Umschalters (46) mit einem Ausgangsanschluss des Akkumulationsmittels (45) verbunden ist, wobei ein Stellkontakt des Umschalters (46) mit der öffentlichen Stromversorgung (2) verbunden ist und ein gemeinsamer Kontakt des Umschalters (46) mit einem zweiten Ladesteuermittel (47) verbunden ist;
worin das zweite Ladesteuermittel (47) ein Mittel aufweist, um die öffentliche Stromversorgung von dem Umschalter (46) von Wechselstrom in Gleichstrom gleichzurichten und um den Strom der Batterie (7) zuzuführen, um diese zu laden, und ferner ein Mittel aufweist, um die in der Batterie (7) akkumulierte Energie zu messen und um ein Energieerfassungssignal (Dk), das die gemessene Energie repräsentiert, dem ersten Ladesteuermittel (44) zuzuführen;
worin das erste Ladesteuermittel (44) konfiguriert ist, um die Lademenge oder die Restladung der Batterie (7) basierend auf dem Energieerfassungssignal (Dk) zu erkennen, und wenn es erkennt, dass die Batterie (7) mit der in dem Akkumulationsmittel (45) akkumulierten Energie nicht ausreichend geladen werden kann, ein Mangelerfassungssignal (A) zu liefern;
worin das erste Ladesteuermittel (44) konfiguriert ist, um kein Mangelerfassungssignal (A) zu liefern, wenn es basierend auf dem Energieerfassungssignal (Dk) erfasst, dass die Batterie (7) vollständig geladen werden kann oder erfolgreich vollständig geladen worden ist;
worin ein Tagunterbrechungssignal (C2) von der Uhr (42) und das Mangelerfassungssignal (A) durch eine ODER-Schaltung (48) logisch geODERT sind und ein Ausgangssignal (B) der ODER-Schaltung (48) dem Umschalter (46) und dem zweiten Ladesteuermittel (47) zugeführt wird;
wobei die Uhr (42) konfiguriert ist, um zu einer Zeit von Mitternacht bis zur Tageszeit das Tagunterbrechungssignal (C2) der ODER-Schaltung (48) zuzuführen, aber nicht zu einer anderen Zeit; und
wobei die ODER-Schaltung (48) konfiguriert ist, um das Ausgangssignal (B) dem Umschalter (46) und dem zweiten Ladesteuermittel (47) zuzuführen, wenn ihr das Tagunterbrechungssignal (C2) oder das Mangelerfassungssignal (A) zugeführt wird;
wobei der Umschalter (46) konfiguriert ist, um einzuschalten, wenn er die Zufuhr des Ausgangssignals (B) erhält, und um die öffentliche Stromversorgung dem zweiten Ladesteuermittel (47) zuzuführen, aber um auszuschalten, wenn er die Zufuhr des Ausgangssignals (B) nicht erhält, und um den im Akkumulationsmittel (45) akkumulierten Nachtstrom dem zweiten Ladesteuermittel (47) zuzuführen;
worin das zweite Ladesteuermittel (47) konfiguriert ist, um die Batterie (7) mittels der öffentlichen Stromversorgung zu laden, wenn es die Zufuhr des Ausgangssignals (B) erhält, so dass zu einer Zeit von Mitternacht zur Tageszeit die Batterieladevorrichtung (41) die Batterie (7) mittels der öffentlichen Stromversorgung lädt; und um die Batterie (7) mittels des Nachtstroms von dem Akkumulationsmittel (45) zu laden, wenn es die Zufuhr des Ausgangssignals (B) nicht erhält.

## Revendications

1. Dispositif de charge de batterie (40) pour charger une batterie (7) avec une énergie de nuit délivrée par une alimentation secteur (2), dans lequel le coût de l'énergie de nuit est inférieur à celui de l'énergie de jour, comprenant :
- des moyens d'accumulation (45) pour accumuler l'énergie de nuit ;
- un commutateur (43) pour connecter l'alimentation secteur (2) à des premiers moyens de commande de charge (44) en réponse à un signal de nuit (C1) délivré par une horloge (42), mais pas de jour ;
dans lequel les premiers moyens de commande de charge (44) comportent des moyens pour redresser l'alimentation secteur d'alternatif en continu et délivrer l'énergie de nuit aux moyens d'accumulation (45), et en outre des moyens pour mesurer l'énergie accumulée dans les moyens d'accumulation (45) ;
- dans lequel un contact à ouverture d'un commutateur-inverseur (46) est connecté à une borne de sortie des moyens d'accumulation (45), un contact à fermeture du commutateur-inverseur (46) est connecté à l'alimentation secteur (2), et un contact commun du commutateur-inverseur (46) est connecté à des deuxièmes moyens de commande de charge (47) ;
dans lequel les deuxièmes moyens de commande de charge (47) comportent des moyens pour redresser l'alimentation secteur provenant du commutateur-inverseur (46) d'alternatif en continu et pour délivrer l'énergie à la batterie (7) pour la charger, et en outre des moyens pour mesurer l'énergie accumulée dans la batterie (7), et pour délivrer un signal de détection d'énergie (Dk) représentatif de l'énergie mesurée aux premiers moyens de commande de charge (44) ;
dans lequel les premiers moyens de commande de charge (44) sont configurés pour reconnaître la quantité de charge ou la quantité restante de la batterie (7) sur la base du signal de détection d'énergie (Dk) et, s'ils détectent que la batterie (7) ne peut pas être suffisamment chargée avec l'énergie accumulée dans les moyens d'accumulation (45), pour délivrer un signal de détection d'insuffisance (A) au commutateur-inverseur (46) et aux deuxièmes moyens de commande de charge (47) ;
dans lequel les premiers moyens de commande de charge (44) sont configurés pour ne pas délivrer, s'ils détectent, sur la base du signal de détection d'énergie (Dk), que la batterie (7) peut être totalement chargée ou a été totalement chargée avec succès, de signal de détection d'insuffisance (A) au commutateur-inverseur (46) et aux deuxièmes moyens de commande de charge (47) ;
dans lequel le commutateur-inverseur (46) est configuré pour se fermer s'il reçoit le signal de détection d'insuffisance (A) et pour délivrer l'alimentation secteur aux deuxièmes moyens de commande de charge (47), mais pour s'ouvrir s'il ne reçoit pas de signal de détection d'insuffisance (A) et pour délivrer l'énergie de nuit accumulée dans les moyens d'accumulation (45) aux deuxièmes moyens de commande de charge (47) ;
dans lequel les deuxièmes moyens de commande de charge (47) sont configurés pour charger la batterie (7) en utilisant l'alimentation secteur lorsqu'ils reçoivent le signal de détection d'insuffisance (A) de sorte que, de nuit, le dispositif de charge de batterie (40) charge la batterie (7) et les moyens d'accumulation (45) simultanément, et pour charger, lorsqu'ils ne reçoivent pas le signal de détection d'insuffisance (A), la batterie (7) en utilisant l'énergie de nuit provenant des moyens d'accumulation (45).

2. Dispositif de charge de batterie (40) pour charger une batterie (7) avec de l'énergie de nuit délivrée par une alimentation secteur (2), dans lequel le coût de l'énergie de nuit est inférieur à celui de l'énergie de jour, comprenant :
- des moyens d'accumulation (45) pour accumuler l'énergie de nuit,
- un commutateur (43) connectant l'alimentation secteur (2) à des premiers moyens de commande de charge (44) en réponse à un signal de nuit (C1) délivré par une horloge (42), mais pas de jour ;
dans lequel les premiers moyens de commande de charge (44) comportent des moyens pour redresser l'alimentation secteur d'alternatif en continu et pour délivrer l'énergie de nuit aux moyens d'accumulation (45), et en outre des moyens pour mesurer l'énergie accumulée dans les moyens d'accumulation (45) ;
dans lequel un contact à ouverture d'un commutateur-inverseur (46) est connecté à une borne de sortie des moyens d'accumulation (45), un contact à fermeture du commutateur-inverseur (46) est connecté à l'alimentation secteur (2), et un contact commun du commutateur-inverseur (46) est connecté à des deuxièmes moyens de commande de charge (47) ;
dans lequel les deuxièmes moyens de commande de charge (47) comportent des moyens pour redresser l'alimentation secteur provenant du commutateur-inverseur (46) d'alternatif en continu et pour délivrer l'énergie à la batterie (7) pour la charger, et en outre des moyens pour mesurer l'énergie accumulée dans la batterie (7), et pour délivrer un signal de détection d'énergie (Dk) représentatif de l'énergie mesurée aux premiers moyens de commande de charge (44),
dans lequel les premiers moyens de commande de charge (44) sont configurés pour reconnaître la quantité de charge ou la quantité restante de la batterie (7) sur la base du signal de détection d'énergie (Dk) et, s'ils détectent que la batterie (7) ne peut pas être suffisamment chargée avec l'énergie accumulée dans les moyens d'accumulation (45), pour délivrer un signal de détection d'insuffisance (A) ;
dans lequel les premiers moyens de commande de charge (44) sont configurés pour ne pas délivrer, s'ils détectent, sur la base du signal de détection d'énergie (Dk), que la batterie (7) peut être totalement chargée ou a été totalement chargée avec succès, de signal de détection d'insuffisance (A) ;
dans lequel une opération OU logique entre un signal d'aube (C2) provenant de l'horloge (42) et le signal de détection d'insuffisance (A) est effectuée par un circuit OU (48) et un signal de sortie (B) du circuit OU (48) est délivré au commutateur-inverseur (46) et aux deuxièmes moyens de commande de charge (47) ;
dans lequel l'horloge (42) est configurée pour délivrer le signal d'aube (C2) au circuit OU (48) à un instant entre minuit et le jour, mais pas à un autre instant ; et
dans lequel le circuit OU (48) est configuré pour délivrer le signal de sortie (B) au commutateur-inverseur (46) et aux deuxièmes moyens de commande de charge (47) lorsque le signal d'aube (C2) ou le signal de détection d'insuffisance (A) est délivré à celui-ci ;
dans lequel le commutateur-inverseur (46) est configuré pour se fermer lorsqu'il reçoit le signal de sortie (B), et pour délivrer l'alimentation secteur aux deuxièmes moyens de commande de charge (47), mais pour s'ouvrir lorsqu'il ne reçoit pas le signal de sortie (B) et pour délivrer l'énergie de nuit accumulée dans les moyens d'accumulation (45) aux deuxièmes moyens de commande de charge (47) ;
dans lequel les deuxièmes moyens de commande de charge (47) sont configurés pour charger la batterie (7) en utilisant l'alimentation secteur lorsqu'ils reçoivent le signal de sortie (B) de sorte que, à un instant entre minuit et le jour, le dispositif de charge de batterie (41) charge la batterie (7) en utilisant l'alimentation secteur, et pour charger la batterie (7) en utilisant l'énergie de nuit provenant des moyens d'accumulation (45) lorsqu'ils ne reçoivent pas le signal de sortie (B).
